# EUROPÄISCHE PATENTANMELDUNG

(11) **EP 1 481 786 A1**
(43) Veröffentlichungstag der Anmeldung: **01.12.2004**
(21) Anmeldenummer: 03011996.0
(22) Anmeldetag: 28.05.2003
(51) Int. Cl.: B29C 47/50, B29B 7/42

(54) **Anlage zum Aufbereiten von Stoffen**

(71) Anmelder: Coperion Werner & Pfleiderer GmbH & Co. KG, 70469 Stuttgart (DE)
(72) Erfinder: Munz, Rainer, 71540 Murrhardt (DE)
(74) Vertreter: Rau, Manfred, Dr. Dipl.-Ing.

(57) **Zusammenfassung**

Eine Anlage zum Aufbereiten von Stoffen weist eine erste Schneckenmaschine (1) und eine dieser nachgeordnete zweite Schneckenmaschine (2) auf. Die Schneckenmaschinen (1, 2) sind mittels eines Funktions-Gehäuses (33), das im wesentlichen seitlich zu einer Durchströmrichtung (32) aus einer Betriebs-Stellung in einer Ausschubrichtung (35) verschiebbar ausgebildet ist.

## Beschreibung

Die Erfindung betrifft eine Anlage zum Aufbereiten von Stoffen nach dem Oberbegriff des Anspruches 1.

Insbesondere bei der Aufbereitung von Kunststoffen ist es oft sinnvoll, zwei oder mehrere hintereinander angeordnete Extruder vorzusehen, die jeweils nur einzelne Verfahrensschritte der Aufbereitung durchführen. Beispielsweise kann beim Einsatz von Kunststoff in Pulverform das Einziehen des Pulvers und das Aufschmelzen in einem ersten Extruder erfolgen. Die Homogenisierung und der Druckaufbau erfolgen dann in einem zweiten Extruder. Derartige Hintereinander-Anordnungen von mehreren Extrudern sind beispielsweise aus der EP 1 005 411 B1, der US 3,261,056 und der DE 2 304 088 A bekannt. Die bekannten Anlagen zeichnen sich dadurch aus, dass zusätzliche Verfahrensschritte, die zwischen den beiden Extrudern auszuführen sind, nur schwer integrierbar sind. Unter Stoffen werden grundsätzlich fließfähige, also in Schneckenmaschinen behandelbare Stoffe verstanden.

Der Erfindung liegt daher die Aufgabe zu Grunde, eine Anlage der gattungsgemäßen Art so weiterzubilden, dass im Bereich der Übergabe-Zone eine größere Vielseitigkeit gegeben ist.

Diese Aufgabe wird erfindungsgemäß durch die Merkmale im Kennzeichnungsteil des Anspruches 1 gelöst. Die erfindungsgemäße Ausgestaltung führt dazu, dass ein Funktions-Gehäuse, das in der Regel gemäß Anspruch 2 Funktions-Elemente aufweist, auf sehr einfache Weise eingesetzt und aus der Übergabe-Zone herausgenommen werden kann. Damit ist eine Reinigung möglich oder auch ein Auswechseln von Funktions-Elementen, für die Beispiele im Anspruch 3 angegeben sind. Wenn keine Funktions-Elemente vorgesehen sind, dann kann das Funktions-Gehäuse kürzer ausgeführt werden, während es bei Vorhandensein von Funktions-Elementen entsprechend länger ausgebildet wird. Auch wenn keine Funktions-Elemente vorgesehen sind, wird es in der Regel sinnvoll sein, das Funktions-Gehäuse vorzusehen, da nach dessen Herausschieben die benachbarten Bereiche der Übergabe-Zone frei liegen, sodass sie beispielsweise bei einem Farbwechsel gereinigt werden können.

Durch die Weiterbildung nach Anspruch 4 wird sichergestellt, dass in Durchströmrichtung keine in die Überström-Kanäle vorragenden Ecken oder Kanten vorhanden sind. Je nach Erwärmungszustand wird das Funktions-Gehäuse nämlich beim Einschieben in die Übergabe-Zone einen geringfügigen unterschiedlichen seitlichen Versatz gegenüber dem ersten und dem dritten Überström-Kanal aufweisen.

Von besonderem Vorteil ist die Ausgestaltung nach Anspruch 5, da hierdurch unter anderem erreicht wird, dass das Funktions-Gehäuse unabhängig von seiner Temperatur fest in die Übergabe-Zone eingefahren werden kann. Anspruch 6 gibt weitere vorteilhafte Weiterbildungen an.

Die Ausgestaltungen nach den Ansprüchen 7 bis 9 haben zur Folge, dass das Funktions-Gehäuse in der Regel nur zur ersten Schneckenmaschine hin verschraubt werden muss und zur zweiten Schneckenmaschine hin lediglich auf Grund der Wärmedehnung dicht anliegt. Auf Grund der Längendehnung des Funktions-Gehäuses durch Erwärmung im Betrieb werden auch die der zweiten Schneckenmaschine zugewandten Anlageflächen dicht gegeneinander gepresst. Da in diesem Bereich sehr oft ein geringer Druck der aufzubereitenden Stoffe herrscht, ist dies ausreichend.

Die Ansprüche 10 und 11 geben weitere Maßnahmen an, die die Handhabung des Funktions-Gehäuses beim Ausschieben oder Einschieben betreffen.

Weitere Merkmale, Vorteile und Einzelheiten der Erfindung ergeben sich aus der nachfolgenden Beschreibung mehrerer Ausführungsbeispiele anhand der Zeichnung. Es zeigt
- Fig. 1: einen vertikalen Schnitt durch ein erstes Ausführungsbeispiel einer Anlage nach der Erfindung mit in Verbindungs-Stellung befindlichem Verbindungsteil,
- Fig. 2: eine Draufsicht auf die Anlage nach dem ersten Ausführungsbeispiel in teilweise aufgebrochener Darstellung,
- Fig. 3: eine Einzelheit III aus Fig. 1,
- Fig. 4: eine Einzelheit des Funktions-Gehäuses,
- Fig. 5: die Anlage nach dem ersten Ausführungsbeispiel mit dem Verbindungsteil in Öffnungs-Stellung,
- Fig. 6: eine Ansicht gemäß dem Sichtpfeil VI in Fig. 1 in aufgebrochener Darstellung,
- Fig. 7: eine perspektivische Darstellung der Übergabe-Zone,
- Fig. 8 bis 13: verschiedene Einbauten im Funktions-Gehäuse,
- Fig. 14: ein zweites Ausführungsbeispiel der Erfindung in einer Darstellung gemäß Fig. 1,
- Fig. 15: eine Einzelheit XV aus Fig. 14,
- Fig. 16: ein drittes Ausführungsbeispiel der Erfindung in einer Darstellung gemäß Fig. 1,
- Fig. 17: eine Einzelheit XVII aus Fig. 16,
- Fig. 18: ein viertes Ausführungsbeispiel der Erfindung im Vertikalschnitt,
- Fig. 19: eine Ansicht gemäß dem Sichtpfeil XIX in Fig. 18 in aufgebrochener Darstellung und
- Fig. 20: eine Einzelheit XX aus Fig. 18.

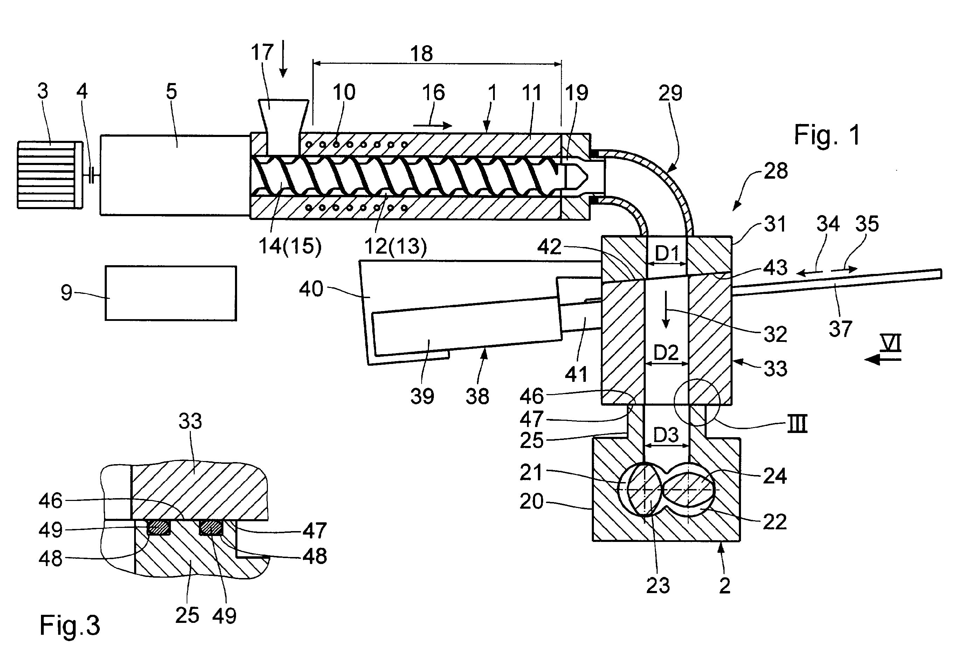

Das in Fig. 1 bis 5 dargestellte erste Ausführungsbeispiel weist einen ersten Extruder 1 und einen zweiten Extruder 2 auf. Der erste Extruder 1 ist oberhalb des zweiten Extruders 2 angeordnet. Der erste Extruder 1 wird mittels eines ersten Motors 3 über eine erste Kupplung 4 und ein erstes Getriebe 5 angetrieben. Der zweite Extruder 2 wird mittels eines zweiten Motors 6 über eine zweite Kupplung 7 und ein zweites Getriebe 8 angetrieben. Die Steuerung der Motoren 3 und 6 erfolgt über eine Steuereinheit 9.

Der erste Extruder 1 weist ein mit einer Heizung 10 versehenes Gehäuse 11 auf, in dem zwei erste Gehäuse-Bohrungen 12, 13 ausgebildet sind, die parallel zueinander verlaufen und etwa 8-förmig ineinander greifen. In diesen Gehäuse-Bohrungen 12, 13 sind zwei erste Schnecken-Wellen 14, 15 angeordnet, die an das erste Getriebe 5 angekuppelt sind. Die Schnecken-Wellen 14, 15 werden gleich- oder gegensinnig angetrieben. Der erste Extruder 1 weist einen in einer Förderrichtung 16 hinter dem ersten Getriebe 5 angeordneten Zuführ-Trichter 17 auf, an den sich eine oder mehrere Behandlungs-Zonen 18 anschließen.

Am Ende des ersten Extruders 1 ist eine Austrags-Zone 19 vorgesehen. Anstelle von zwei Gehäuse-Bohrungen und entsprechend zwei Schnecken-Wellen können auch nur eine Bohrung oder drei und mehr Bohrungen und eine entsprechende Zahl von Schnecken-Wellen vorhanden sein.

Der zweite Extruder 2 weist ebenfalls ein Gehäuse 20 mit einer Heizung auf, in dem zwei zweite Gehäuse-Bohrungen 21, 22 parallel zueinander und einander durchdringend ausgebildet sind, die also ebenfalls einen 8-förmigen Querschnitt begrenzen. In den zweiten Gehäuse-Bohrungen 21, 22 sind zwei mit dem zweiten Getriebe 8 gekuppelte zweite Schnecken-Wellen 23, 24 angeordnet, die ebenfalls gleich- oder gegensinnig drehantreibbar sind. Der zweite Extruder 2 weist anschließend an das zweite Getriebe 8 einen Zuführ-Stutzen 25 auf. An den Zuführ-Stutzen 25 schließen sich in Förderrichtung 16 eine oder mehrere Behandlungs-Zonen 26 an. Am Ende des zweiten Extruders 2 ist wiederum eine Austrags-Zone 27 vorgesehen.

Auch für den zweiten Extruder 2 gilt, dass nur eine oder mehr als zwei Bohrungen und eine entsprechende Zahl von Schnecken-Wellen vorhanden sein können. Auch beim zweiten Extruder 2 kann der Antrieb der Schnecken-Wellen gleich- oder gegenläufig erfolgen.

Zwischen dem ersten Extruder 1 und dem zweiten Extruder 2 ist eine Übergabe-Zone 28 ausgebildet, die einen Rohr-Krümmer 29, beispielsweise ein beheizbares Doppelmantelrohr, aufweist, der mit dem ersten Extruder 1 verbunden ist und sich an dessen Austrags-Zone 19 anschließt. Anstelle des Rohr-Krümmers 29 kann auch ein Anfahrventil zum Ausschleusen von beim Anfahren anfallenden, nicht brauchbaren Stoffen vorgesehen werden. An dem dem zweiten Extruder 2 zugewandten Ende des Rohr-Krümmers 29 ist ein blockartig ausgebildeter Flansch 31 ausgebildet. Zwischen dem blockartigen Flansch 31 und dem Zuführstutzen 25 des zweiten Extruders 2 ist ein quer zur Durchströmungsrichtung 32 verschiebbares Funktions-Gehäuse 33 angeordnet, das keilförmig ausgebildet ist und sich in Einschubrichtung 34 verjüngt, d. h. in Ausschubrichtung 35 erweitert.

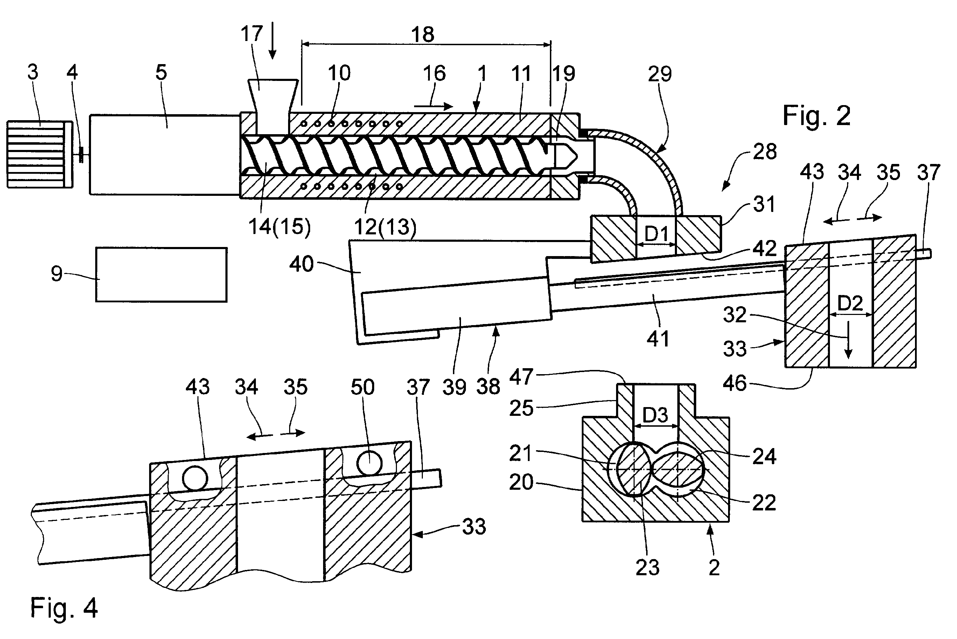

Dieses Funktions-Gehäuse 33 ist mit einem dem Flansch 31 zugewandten, flanschartig seitlich vorstehenden Rand 36 in Schienen 37 geführt, die sich in Einschubrichtung 34 bzw. Ausschubrichtung 35 erstrecken und am blockartigen Flansch 31 des Rohr-Krümmers 29 befestigt sind. Diese Schienen 37 können sich - in Ausschubrichtung 35 - so weit über den Flansch 31 hinaus erstrecken, dass das Funktions-Gehäuse 33 vollständig vom Flansch 31 und dem Zuführstutzen 25 weggeschoben werden kann, wie Fig. 2 entnehmbar ist. Das Ausschieben des Funktions-Gehäuses 33 erfolgt in der Regel vom ersten Extruder 1 weg, um von diesem frei zu sein.

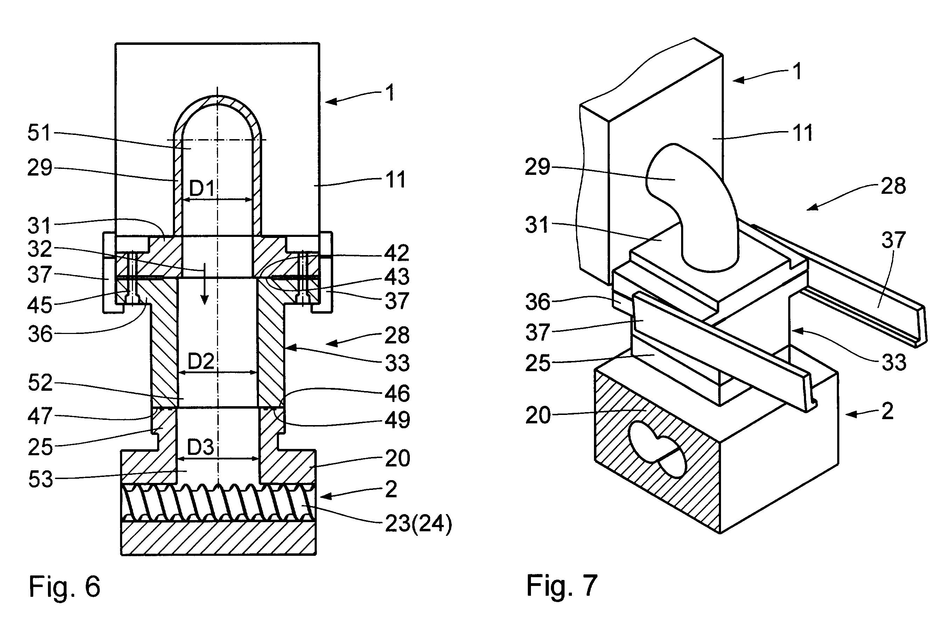

Auf der dem überstehenden Bereich der Schienen 37 abgewandten Seite des Funktions-Gehäuses 33 ist ein Schiebe-Antrieb 38 vorgesehen, bei dem es sich um einen Linearantrieb, und zwar bevorzugt einen druckmittelbeaufschlagbaren Kolben-Zylinder-Antrieb, handelt, dessen Zylinder 39 mittels einer Trag-Einrichtung 40 mit dem Flansch 31 verbunden ist, während seine Kolbenstange 41 am Funktions-Gehäuse 33 angreift. Die Wirkrichtung dieses Schiebe-Antriebes 38 verläuft parallel zu den Schienen 37, also in Einschub-Richtung 34 bzw. in Ausschubrichtung 35. Die Anlagefläche 42 des Flansches 31 und die Anlagefläche 43 des Randes 36 verlaufen auch in den Richtungen 34, 35. In eingeschobenem Zustand wird das Funktions-Gehäuse 33 mit dem Flansch 31 des Krümmers 29 mittels Schrauben 45 verbunden, wie Fig. 6 entnehmbar ist.

Bei dem ersten Ausführungsbeispiel erstrecken sich die einander zugeordneten, am Funktions-Gehäuse 33 und dem Zuführ-Stutzen 25 ausgebildeten Anlageflächen 46, 47 quer zur Durchströmungsrichtung 32. In der Anlagefläche 47 des Zuführ-Stutzens 25 sind umlaufende Ausnehmungen 48 ausgebildet, in denen Dichtungs-Packungen 49 angeordnet sind, die in entlastetem Zustand über die Anlagefläche 47 vorstehen.

Zum Ausschieben des Funktions-Gehäuses 33 aus seiner in Fig. 1 dargestellten Betriebs-Stellung in die in Fig. 2 dargestellte Außer-Betriebs-Stellung werden die Schrauben 45 gelöst und der Schiebe-Antrieb 38 betätigt. Da die Schienen 37 gegenüber der Richtung der Anlageflächen 46, 47 nach oben geneigt sind, wird das Funktions-Gehäuse 33 bereits zu Beginn der Ausschub-Bewegung von der Anlagefläche 47 abgehoben. Beim Lösen der Schrauben 45 entsteht zwischen den Anlageflächen 42, 43 ein geringfügiges Spiel, sodass das Ausschieben des Funktionsgehäuses 33 entlang der Anlageflächen 43 und 36 vom ersten Augenblick an reibungsarm erfolgt. Zu überwinden sind zum einen die Scherkräfte zum Durchtrennen des Stoffpfropfens in den Überström-Kanälen 51, 52, 53 und zum anderen Reibungskräfte zwischen dem flanschartigen Rand 36 und den Schienen 37. Das Einschieben geht in umgekehrter Richtung vonstatten. In der letzten Phase des Einschiebens werden die Dichtungs-Packungen 49 von der Anlagefläche 46 des Funktions-Gehäuses 33 solange niedergedrückt, bis der Rand 36 von den Schienen 37 abhebt. Im weiteren Verlauf kommen die Anlageflächen 42 und 43 zur Anlage aneinander. Dann kann der Rand 36 mit dem Flansch 31 des Rohr-Krümmers 29 mittels den Schrauben 45 fest verschraubt werden. Um das Verschieben des Funktions-Gehäuses 33 zu erleichtern, können an diesem gemäß Fig. 4 auch Rollen 50 angebracht sein, die auf den Schienen 37 aufliegen.

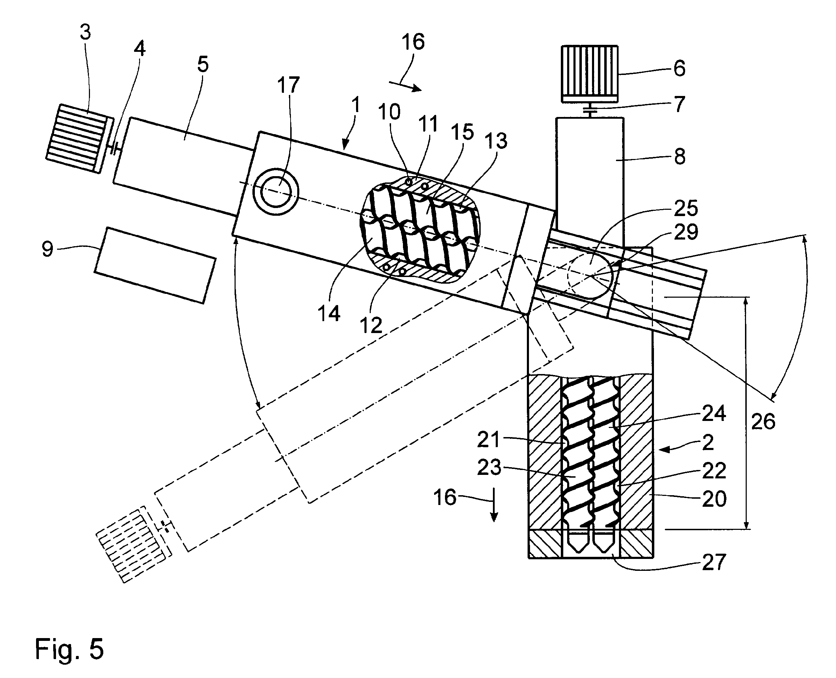

Damit sichergestellt ist, dass die im Krümmer 29, dem Funktions-Gehäuse 33 und dem Zuführ-Stutzen 25 ausgebildeten Überström-Kanäle 51, 52, 53 an den jeweiligen Übergangsstellen keine in den Strömungsweg vorstehenden Ecken oder Kanten aufweisen, gilt für den Durchmesser D₁ des Überström-Kanals 51 des Krümmers 29 bezogen auf den Durchmesser D₂ des Überstrom-Kanals 52 des Funktions-Gehäuses 33 und für letzteren im Vergleich zum Durchmesser D₃ des Überstrom-Kanals 53 des Zufuhr-Stutzens 25: D₁ ≤ D₂ ≤ D₃. Da die Überstrom-Kanäle 51, 52, 53 kreisförmigen Querschnitt aufweisen und da das Funktions-Gehäuse 33 auf dem Zuführ-Stutzen 25 lediglich aufliegt, muss der erste Extruder 1 nicht quer zum zweiten Extruder 2 angeordnet sein, sondern kann unter einem Winkel zu diesem angeordnet sein, wie in Fig. 5 angedeutet ist.

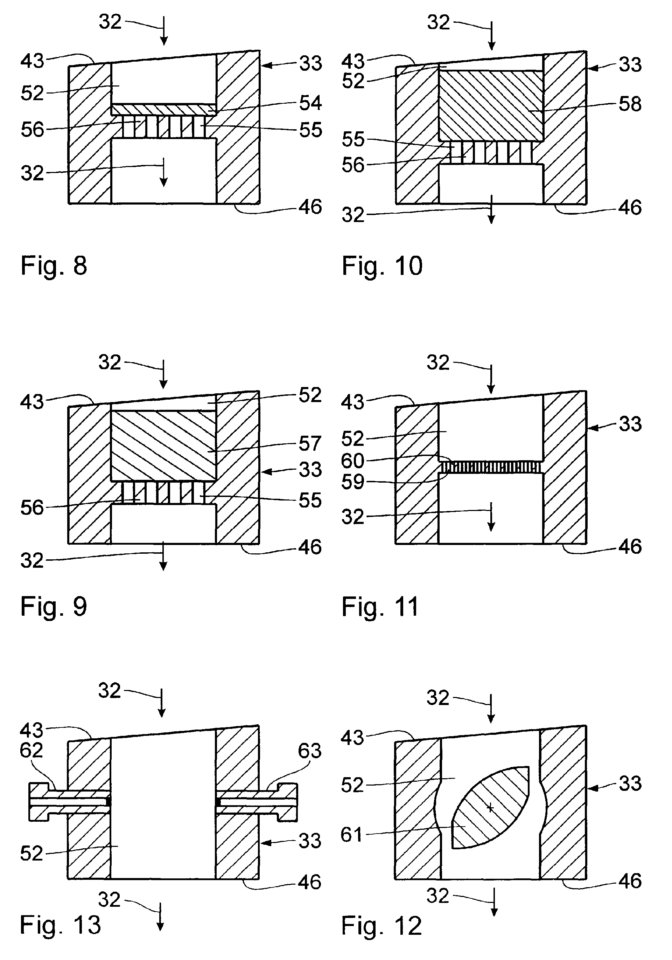

In den Fig. 8 bis 13 sind verschiedene Funktions-Elemente dargestellt, die in dem Funktions-Gehäuse 33 vorhanden sein können. Gemäß Fig. 8 ist im Überstrom-Kanal 52 ein Sieb 54 auswechselbar angeordnet, das auf einer mit verhältnismäßig großen Bohrungen 55 versehenen Stützplatte 56 abgestützt ist. Gemäß Fig. 9 ist auf der Stützplatte 56 ein statischer Mischer 57 herausnehmbar angeordnet. Gemäß Fig. 10 ist auf der Stützplatte 56 ein Filter 58 aus Sintermetall oder Metallschaum oder einer Fritte herausnehmbar angeordnet. Bei der Ausgestaltung nach Fig. 11 ist in das Funktions-Gehäuse 33 eine Seiherplatte 59 eingebaut, die deutlich kleinere Bohrungen 60 als die Stützplatte 56 aufweist. Die Anzahl der kleinen Bohrungen 60 in der Seiherplatte 59 ist deutlich höher als die Anzahl der großen Bohrungen 55 in der Stützplatte 56.

Gemäß Fig. 13 ist in das Funktions-Gehäuse 33 eine als Flügel-Drossel ausgebildete Drossel 61 eingebaut. Schließlich sind gemäß Fig. 13 in den Überstrom-Kanal 52 hineinführende Anschlüsse 62, 63 in das Funktions-Gehäuse 33 eingebaut, in die Messwert-Geber zur Online-Überwachung des durchströmenden Materials oder zur Entnahme von Proben oder zur Zugabe von Stoffen eingebaut sind. Die geschilderten Einbauten können selbstverständlich auch in Kombination im Funktions-Gehäuse 33 angeordnet sein.

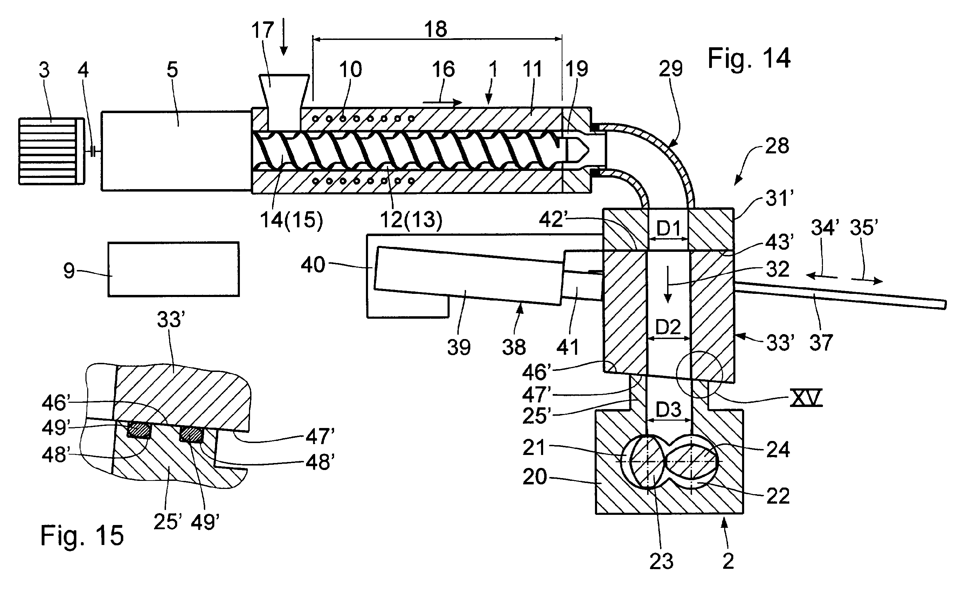

Das zweite in den Fig. 14 und 15 dargestellte Ausführungsbeispiel unterscheidet sich von dem zuvor beschriebenen ersten Ausführungsbeispiel nur dadurch, dass die einander zugeordneten Anlageflächen 42', 43' zwischen Funktions-Gehäuse 33' und Flansch 31' quer zur Durchströmungsrichtung 32 angeordnet sind und dass entsprechend die einander zugeordneten Anlageflächen 46', 47' zwischen Funktions-Gehäuse 33' und Zufuhr-Stützen 25' in Ausschubrichtung 35' und Einschubrichtung 34' geneigt verlaufen. Entsprechend geneigt angeordnet ist dann auch der Schiebe-Antrieb 38.

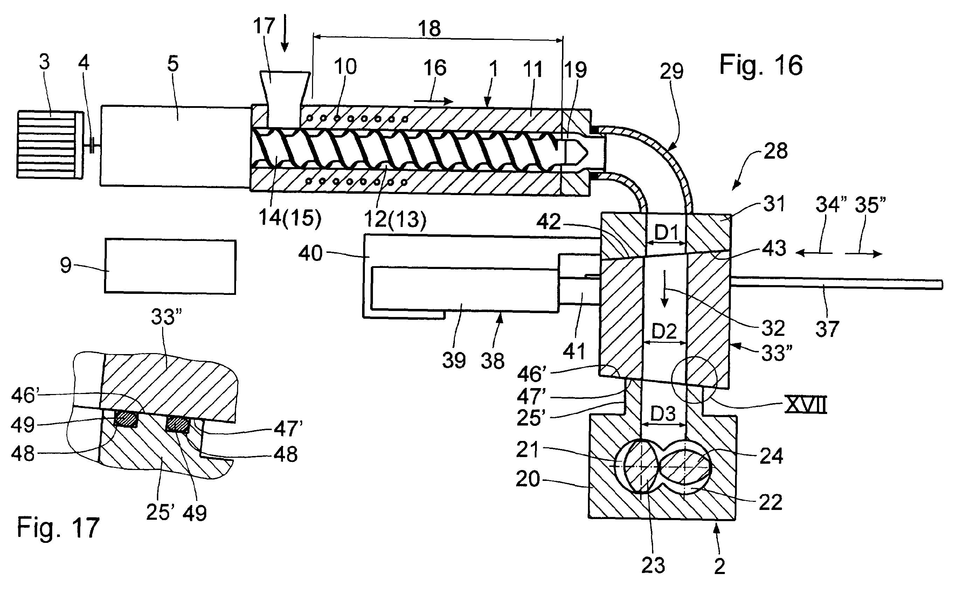

Das dritte Ausführungsbeispiel nach Fig. 16 und 17 unterscheidet sich von den zuvor beschriebenen Ausführungsbeispielen nur dadurch, dass sowohl die Anlageflächen 42, 43 zwischen Funktions-Gehäuse 33" und Flansch 31 als auch die Anlageflächen 46', 47' zwischen Funktions-Gehäuse 33" und Zufuhr-Stützen 25' gegenüber der Durchströmungsrichtung 32 geneigt sind. In diesem Fall verläuft die Einschubrichtung 34" und entsprechend die Ausschubrichtung 35" quer zur Durchströmungsrichtung 32.

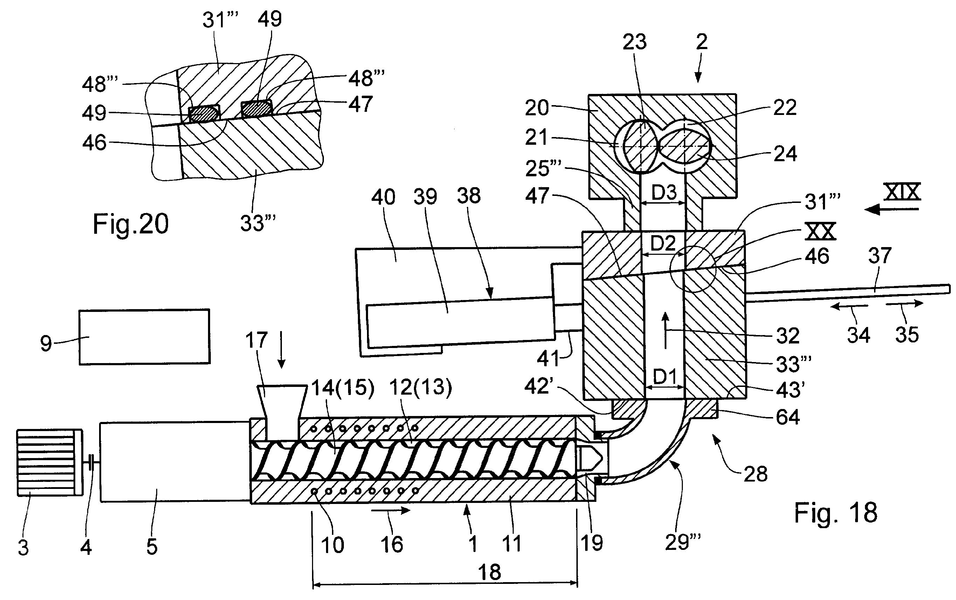

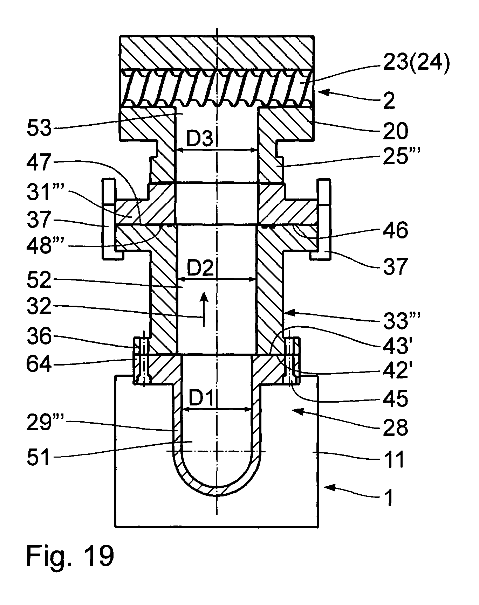

Beim vierten Ausführungsbeispiel nach Fig. 18 bis 20 ist der erste Extruder 1 unterhalb des zweiten Extruders 2 angebracht, dessen Zuführ-Stutzen 25'" also nach unten gerichtet ist. Der blockartige Flansch 31"' ist entsprechend am Zuführ-Stutzen 25"' angebracht. Der Rohr-Krümmer 29"' ist mit einem Verbindungsflansch 64 versehen, über den in der Betriebs-Stellung des Funktions-Gehäuses 33'" der Krümmer 29'" und das Funktions-Gehäuse 33'" mittels der Schrauben 45 miteinander verbunden werden, sodass die Anlageflächen 42' und 43' fest und dicht gegeneinander liegen. Bei diesem Ausführungsbeispiel sind die Schienen 37 und entsprechend der Schiebe-Antrieb 38 am Flansch 31"' angebracht. Die Dichtungs-Packungen 49 befinden sich in Ausnehmungen 48'" in der Anlagefläche 47 des Flansches 31"'. Abweichend zu der Winkellage des Schiebe-Antriebs 38 und der Schienen 37 im ersten Ausführungsbeispiel muss beim vierten Ausführungsbeispiel der Winkel des Schiebe-Antriebs 38 zwischen der Waagerechten und der Winkellage der Anlagenflächen 46 und 47 liegen, damit beim Ausschieben des Funktions-Gehäuses 33'" sofort alle Anlageflächen 46 und 47 bzw. 42' und 43' voneinander abheben.

Im Übrigen gilt für das zweite bis vierte Ausführungsbeispiel jeweils die Beschreibung zum ersten Ausführungsbeispiel.

## Patentansprüche

1. Anlage zum Aufbereiten von Stoffen,
- mit einer ersten Schneckenmaschine (1),
- mit einer der ersten Schneckenmaschine (1) nachgeordneten zweiten Schneckenmaschine (2) und
- mit einer die erste Schneckenmaschine (1) mit der zweiten Schneckenmaschine (2) verbindenden Übergabe-Zone (28),
**dadurch gekennzeichnet,**
**dass** in der Übergabe-Zone (28) ein Funktions-Gehäuse (33 bis 33''') mit einem in einer Durchströmrichtung (32) gerichteten zweiten Überström-Kanal (52) mit einem Durchmesser D₂ angeordnet ist, das im Wesentlichen seitlich zur Durchströmrichtung (32) aus einer Betriebs-Stellung in der Übergabe-Zone (28) in einer Ausschubrichtung (35 bis 35"') verschiebbar ausgebildet ist und
**dass** der zweite Überström-Kanal (52) des Funktions-Gehäuses (33 bis 33"') mit der ersten Schneckenmaschine (1) mittels eines ersten Überström-Kanals (51) mit einem Durchmesser D₁ und mit der zweiten Schneckenmaschine (2) mittels eines dritten Überström-Kanals (53) mit einem Durchmesser D₃ verbunden ist

2. Anlage nach Anspruch 1, **dadurch gekennzeichnet,**
**dass** das Funktions-Gehäuse (33 bis 33''') mindestens ein im Überström-Kanal (52) angeordnetes Funktions-Element aufweist.

3. Anlage nach Anspruch 2, **dadurch gekennzeichnet,**
**dass** als Funktions-Element ein Sieb (54) und/oder eine Stützplatte (56) und/oder ein statischer Mischer (57) und/oder ein Filter (58) und/oder eine Seiherplatte (59) im Funktions-Gehäuse (33) vorgesehen ist.

4. Anlage nach einem der Ansprüche 1 bis 3, **dadurch gekennzeichnet, dass** für das Verhältnis des Durchmesser D₂ des Überström-Kanals (52) des Funktions-Gehäuses (33 bis 33"') im Verhältnis zu D₁ und D₃ gilt: D₁ ≤ D₂ ≤ D₃.

5. Anlage nach einem der Ansprüche 1 bis 4, **dadurch gekennzeichnet, dass** das Funktions-Gehäuse (33 bis 33''') keilförmig sich in Ausschubrichtung (35 bis 35"') erweiternd ausgebildet ist.

6. Anlage nach Anspruch 5, **dadurch gekennzeichnet,**
**dass** das Funktions-Gehäuse (33 bis 33''') eine einer dem ersten Überström-Kanal (51) zugeordneten Anlagefläche (42) zugewandte erste Anlagefläche (43, 43', 43 ") und eine einer dem dritten Überström-Kanal (53) zugeordneten Anlagefläche (47, 47') zugewandte zweite Anlagefläche (46, 46') aufweist und
**dass** die erste Anlagefläche (43, 43', 43") und/oder die zweite Anlagefläche (46, 46') keilförmig zueinander verlaufen.

7. Anlage nach Anspruch 6, **dadurch gekennzeichnet,**
**dass** in der zweiten Anlagefläche (46) des Funktions-Gehäuses (33 bis 33"') oder in der dem dritten Überström-Kanal (53) zugeordneten Anlagefläche (47) Dichtungen (49) angeordnet sind.

8. Anlage nach Anspruch 7, **dadurch gekennzeichnet,**
**dass** die Ausschubrichtung (35) so verläuft, dass bei der Ausschubbewegung die den Dichtungen (49) zugewandte Anlagefläche (46) von den Dichtungen (49) abgehoben wird.

9. Anlage nach einem der Ansprüche 6 bis 8, **dadurch gekennzeichnet, dass** nur die dem ersten Überström-Kanal (51) zugewandten Anlageflächen (42, 43 bzw. 42', 43') in der Betriebs-Stellung miteinander verschraubbar sind.

10. Anlage nach einem der Ansprüche 1 bis 9, **dadurch gekennzeichnet, dass** das Funktions-Gehäuse (33 bis 33''') auf Schienen (37) verschiebbar ist.

11. Anlage nach Anspruch 10, **dadurch gekennzeichnet,**
**dass** am Funktions-Gehäuse (33 bis 33''') ein Verschiebe-Antrieb (38) angreift.
